# EUROPÄISCHE PATENTSCHRIFT

(11) **EP 3 784 537 B1**
(45) Veröffentlichungstag und Bekanntmachung des Hinweises auf die Patenterteilung: **28.05.2025**
(21) Anmeldenummer: 19711518.1
(22) Anmeldetag: 07.03.2019
(51) Int. Cl.: B60T 7/12, B60T 13/58, B60T 13/74

(54) **BREMSSYSTEME FÜR EIN FAHRZEUG UND VERFAHREN ZUM AUTONOMEN ABBREMSEN EINES FAHRZEUGS**
BRAKE SYSTEMS FOR A VEHICLE AND A METHOD FOR AUTONOMOUSLY BRAKING A VEHICLE
SYSTÈMES DE FREINAGE POUR VÉHICULE ET PROCÉDURE DE FREINAGE AUTONOME D'UN VÉHICULE

(30) Priorität: 27.04.2018 DE 102018206563
(43) Veröffentlichungstag der Anmeldung: 03.03.2021
(73) Patentinhaber: Robert Bosch GmbH, 70442 Stuttgart (DE)
(72) Erfinder: SCHMIDT, Thomas, 74321 Bietigheim-Bissingen (DE); EWALD, Julian, 70191 Stuttgart (DE); BLATTERT, Dieter, 74366 Kirchheim/Neckar (DE)
(86) Internationale Anmeldenummer: PCT/EP2019/055689
(87) Internationale Veröffentlichungsnummer: WO 2019/206506

(56) Entgegenhaltungen:
- EP-B1- 3 071 458
- DE-A1- 102004 015 447
- DE-A1- 102012 023 341
- US-A1- 2008 189 019
- US-A1- 2016 264 113
- US-A1- 2017 137 008

## Beschreibung

Die Erfindung betrifft Bremssysteme für ein Fahrzeug. Des Weiteren betrifft die Erfindung Verfahren zum autonomen Abbremsen eines Fahrzeugs.

### Stand der Technik

In der DE 10 2013 209 006 A1 sind eine Steuervorrichtung für ein bremskraftverstärktes autonomes Bremssystem eines Fahrzeugs und ein korrespondierendes Verfahren zum Betreiben eines bremskraftverstärkten autonomen Bremssystems eines Fahrzeugs offenbart. Mittels eines Betriebs der Steuervorrichtung, bzw. mittels eines Ausführens des korrespondierenden Verfahrens, soll unter Verwendung eines aktiven Bremskraftverstärkers und/oder mindestens einer Pumpe des jeweiligen Bremssystems ein autonomer Bremsdruckaufbau in mindestens einem seiner hydraulischen Radbremszylinder bewirkbar sein.

In der DE 10 2012 023341 A1 ist ein Radbremszylinder für ein Bremssystem eines Fahrzeugs offenbart, wobei der Radbremszylinder ausgebildet ist mit einer Druckkammer, welche von einem verstellbaren ersten Bremskolben begrenzt ist, und derart an einem Teilvolumen eines hydraulischen Bremskreises des Bremssystems angebunden ist, dass der erste Bremskolben mittels eines zumindest in dem jeweiligen Teilvolumen gesteigerten Drucks verstellbar ist, einem Aktor und einem zweiten Bremskolben, welcher mittels eines Betriebs des Aktors verstellbar ist.

Ein derartiger Radbremszylinder ist auch in der US 2017/137008 A1 offenbart.

Die US 2016/264113 A1 beschreibt ein Bremssystem für ein Fahrzeug, welches je eine Einzelradbremse pro Rad des Fahrzeugs aufweist. Außerdem ist mindestens ein hydraulischer Radbremszylinder jeweils an je einem Teilvolumen mindestens eines hydraulischen Bremskreises des Bremssystems angebunden. Weitere Bespiele für Bremssysteme sind in der US 2008/189019 A1 und in der DE 10 2004 015447 A1 offenbart.

### Offenbarung der Erfindung

Die Erfindung schafft ein Bremssystem für ein Fahrzeug mit den Merkmalen des Anspruchs 1, ein Bremssystem für ein Fahrzeug mit den Merkmalen des Anspruchs 4, ein Verfahren zum autonomen Abbremsen eines Fahrzeugs mit den Merkmalen des Anspruchs 6 und ein Verfahren zum autonomen Abbremsen eines Fahrzeugs mit den Merkmalen des Anspruchs 7.

### Vorteile der Erfindung

Die vorliegende Erfindung schafft Möglichkeiten zum autonomen Abbremsen eines Fahrzeugs mit (vollständiger) funktionaler Redundanz. Unter der (vollständigen) funktionalen Redundanz ist zu verstehen, dass das jeweilige Fahrzeug selbst bei einer signifikanten Funktionsbeeinträchtigung mindestens einer Bremssystemkomponente des jeweils eingesetzten Bremssystems aufgrund einer gewährleisteten Verfügbarkeit einer "Ersatzbremssystemkomponente" noch problemlos autonom abgebremst werden kann. Ein aktives Eingreifen eines Fahrers des jeweiligen Fahrzeugs zum Überbrücken der mindestens einen funktionsbeeinträchtigten Bremssystemkomponente ist bei einer Nutzung der vorliegenden Erfindung nicht notwendig. Die vorliegende Erfindung trägt somit zur Steigerung eines Komforts und eines Sicherheitsstandards von vollautomatisierten (vollautonomen) Fahrfunktionen bei.

Die vorliegende Erfindung schafft insbesondere Bremssysteme, welche aufgrund einer (vollständigen) funktionalen Redundanz zukünftige Anforderungen für vollautomatisierte (vollautonome) Fahrfunktionen vorteilhaft erfüllen. Insbesondere kann jedes mit einem erfindungsgemäßen Bremssystem ausgestattete Fahrzeug selbst bei einem vollständigen Ausfall seiner hydraulischen Bremssystemkomponenten noch ohne eine aktive Beteiligung des Fahrers (d.h. autonom, bzw. vollautomatisiert) abgebremst werden. Dies kann sowohl für eine Kurzzeit-Überbrückungsfunktion ("Short-Time-Fail-Operation", Dauer von etwa 2 Minuten) als auch für eine Langzeit-Überbrückungsfunktion ("Long-Time-Fail-Operation", Dauer bis zu mehreren Stunden) genutzt werden. Unter dem autonomen Abbremsen des Fahrzeugs kann sowohl ein autonomes Verlangsamen des Fahrzeugs als auch ein autonomes In-den-Stillstand-Bringen des Fahrzeugs (bzw. ein autonomes In-dem-Stillstand-Halten des Fahrzeugs) verstanden werden. Selbst ein vollständiger Ausfall aller hydraulischen Bremssystemkomponenten des Bremssystems kann aufgrund der (vollständigen) funktionalen Redundanz des Bremssystems überbrückt werden ohne dass der Fahrer unterstützend eingreifen muss.

Selbst bei einer Leckage an seinen hydraulischen Bremssystemkomponenten kann jedes erfindungsgemäße Bremssystem noch zum Ausführen von vollautomatisierten (vollautonomen) Fahrfunktionen eingesetzt werden kann. Insbesondere kann das mit dem jeweiligen Bremssystem ausgestattete Fahrzeug trotz der Leckage noch ohne einen Einsatz des Fahrers (d.h. autonom/automatisiert) abgebremst werden. Das mit dem jeweiligen Bremssystem ausgestattete Fahrzeug eignet sich somit hervorragend für ein autonomes oder teilautonomes (automatisiertes oder teilautomatisiertes) "fahrerloses Fahren".

In einer vorteilhaften Ausführungsform des Bremssystems des Anspruchs 1 umfasst das Bremssystem mindestens eine Steuervorrichtung, welche jeweils derart ausgebildet ist, dass die mindestens eine Steuervorrichtung zumindest zeitweise in einem autonomen Bremsmodus betreibbar ist, in welchem zumindest die motorisierte Bremsdruckaufbauvorrichtung, die mindestens eine elektromechanische und/oder elektromagnetische Einzelradbremse und/oder der jeweilige elektromechanische oder elektromagnetische Aktor des mindestens einen elektromechanischen und/oder elektromagnetischen Radbremszylinders mittels der mindestens einen Steuervorrichtung so ansteuerbar sind, dass das Fahrzeug mittels des Betriebs der motorisierten Bremsdruckaufbauvorrichtung und/oder mittels eines Betriebs der mindestens einen elektromechanischen und/oder elektromagnetischen Einzelradbremse und/oder des mindestens einen elektromechanischen und/oder elektromagnetischen Aktors autonom abbremsbar ist. Die mindestens eine Steuervorrichtung kann somit eine (vollständige) funktionale Redundanz für das automatisierte/autonome Fahren (unter Vermeidung einer dynamischen Redundanz) realisieren.

Als vorteilhafte Weiterbildung des Bremssystems des Anspruchs 2 kann die mindestens eine in dem autonomen Bremsmodus vorliegende Steuervorrichtung dazu ausgelegt sein, das Fahrzeug primär mittels des Betriebs der mindestens einen elektromechanischen und/oder elektromagnetischen Einzelradbremse und/oder des mindestens einen elektromechanischen und/oder elektromagnetischen Aktors autonom abzubremsen, und, die motorisierte Bremsdruckaufbauvorrichtung nur dann zum autonomen Abbremsen des Fahrzeugs einzusetzen, wenn eine Funktionsbeeinträchtigung der mindestens einen elektromechanischen und/oder elektromagnetischen Einzelradbremse und/oder des mindestens einen elektromechanischen und/oder elektromagnetischen Aktors festgestellt ist und/oder wenn eine aktuell maximal bewirkbare Gesamt-Bremsleistung der mindestens einen elektromechanischen und/oder elektromagnetischen Einzelradbremse und des mindestens einen elektromechanischen und/oder elektromagnetischen Aktors nicht ausreichend zum autonomen Abbremsen des Fahrzeugs innerhalb einer vorgegebenen Wegstrecke und/oder innerhalb eines vorgegebenen Zeitintervalls ist. Die mindestens eine elektromechanische und/oder elektromagnetische Einzelradbremse und/oder der mindestens eine elektromechanische und/oder elektromagnetische Aktor können somit als primäre Aktuatorik (Master-Aktuatorik) zum autonomen Abbremsen des Fahrzeugs eingesetzt werden. Vorzugsweise kann der Betrieb der mindestens einen elektromechanischen und/oder elektromagnetischen Einzelradbremse und/oder des mindestens einen elektromechanischen und/oder elektromagnetischen Aktors zusätzlich zur Umwandlung von kinetischer Energie des abzubremsenden Fahrzeugs in elektrische Energie genutzt werden. Die motorisierte Bremsdruckaufbauvorrichtung dient als sekundäre Aktuatorik (Slave-Aktuatorik) dazu, im "Fehlerfall" und/oder im "Extremfall" Funktionen der primären Aktuatorik zu übernehmen/zu ergänzen. Die motorisierte Bremsdruckaufbauvorrichtung (mit den damit zusammenwirkenden hydraulischen Bremssystemkomponenten) realisiert damit eine "autonome Rückfallebene", welche ein Eingreifen des Fahrzeugs zum Überbrücken von nicht mehr mittels der primären Aktuatorik ausführbaren Funktionen unnötig macht.

Beispielsweise kann das Bremssystem einen an dem mindestens einen Bremskreis angebundenen Hauptbremszylinder aufweisen, in welchem eine Drucksteigerung mittels einer Betätigung eines an dem Hauptbremszylinder angebundenen Bremsbetätigungselements durch einen Fahrer des Fahrzeugs bewirkbar ist. Der Fahrer kann in diesem Fall selbst bei einem vollständigen Ausfall aller elektrischen Komponenten des Bremssystems (beispielsweise aufgrund eines Ausfalls eines Bordnetzes des Fahrzeugs) noch mittels seiner Bremskraft das Fahrzeug in den Stillstand bringen (und evtl. in dem Stillstand halten). Außerdem kann die motorisierte Bremsdruckaufbauvorrichtung ein dem Hauptbremszylinder vorgelagerter elektromechanischer Bremskraftverstärker sein. Somit kann ein häufig bereits in Fahrzeugen verbauter elektromechanischer Bremskraftverstärker (wie z.B. ein iBooster, ein eBooster, ein elektronischer Booster, ein eBKV, ein elektronischer Bremskraftverstärker) zur Realisierung der hier beschriebenen Ausführungsform des Bremssystems eingesetzt werden. Dies reduziert die beim Realisieren der Ausführungsform anfallenden Kosten.

Des Weiteren schaffen auch die korrespondierenden Verfahren zum autonomen Abbremsen eines Fahrzeugs die oben beschriebenen Vorteile. Es wird ausdrücklich darauf hingewiesen, dass die Verfahren zum autonomen Abbremsen eines Fahrzeugs gemäß den oben erläuterten Ausführungsformen von Bremssystemen weiterbildbar sind.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform eines erfindungsgemäßen Bremssystems;
- Fig. 2: eine schematische Darstellung einer Ausführungsform eines weiteren erfindungsgemäßen Bremssystems;
- Fig. 3: ein Flussdiagramm zum Erläutern eines Herstellungsverfahrens für einen elektromechanischen oder elektromagnetischen Radbremszylinder, welches nicht unter die vorliegende Erfindung fällt;
- Fig. 4: ein Flussdiagramm zum Erläutern einer Ausführungsform eines erfindungsgemäßen Verfahrens zum autonomen Abbremsen eines Fahrzeugs;
- Fig. 5: ein Flussdiagramm zum Erläutern einer Ausführungsform eines weiteren erfindungsgemäßen Verfahrens zum autonomen Abbremsen eines Fahrzeugs; und
- Fig. 6: ein Koordinatensystem zum Erläutern einer Weiterbildung der in Fig. 4 und Fig. 5 schematisch wiedergegebenen Verfahren.

### Ausführungsformen der Erfindung

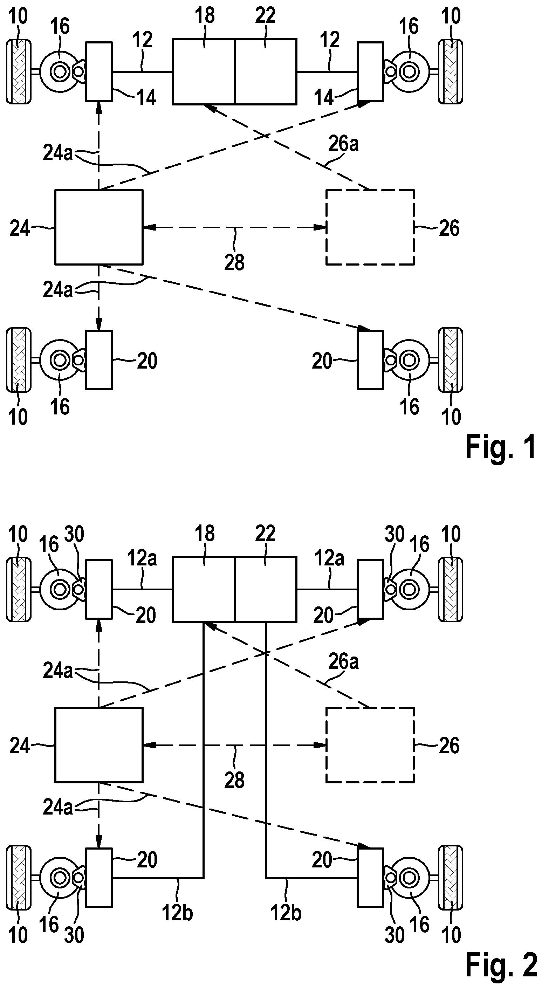

Fig. 1 zeigt eine schematische Darstellung einer Ausführungsform eines erfindungsgemäßen Bremssystems.

Das in Fig. 1 schematisch dargestellte Bremssystem ist an einem Fahrzeug/Kraftfahrzeug montierbar/montiert, wobei von dem Fahrzeug/Kraftfahrzeug lediglich seine Räder 10 schematisch wiedergegeben sind. Es wird darauf hingewiesen, dass eine Verwendbarkeit des im Weiteren erläuterten Bremssystemtyps nicht auf das schematisch wiedergegebene Fahrzeug/Kraftfahrzeug mit genau vier Räder 10 beschränkt ist. Ebenso ist die Verwendbarkeit dieses Bremssystemtyps auf keinen bestimmten Fahrzeugtyp/Kraftfahrzeugtyp limitiert.

Das Bremssystem umfasst mindestens einen hydraulischen Bremskreis 12. Obwohl das Bremssystem der Fig. 1 nur einen einzigen Bremskreis 12 hat, kann es in einer Weiterbildung auch zwei oder mehr als zwei Bremskreise 12 aufweisen. Außerdem umfasst das Bremssystem mindestens einen elektromechanischen oder elektromagnetischen Radbremszylinder 14, welcher jeweils einem Rad 10 des Fahrzeugs zugeordnet ist und jeweils an je einem Teilvolumen des mindestens einen hydraulischen Bremskreises 12 angebunden ist. Als optionale Ergänzung kann der mindestens eine Bremskreis 12 noch mindestens eine weitere Bremssystemkomponente, wie beispielsweise mindestens ein elektrisches schaltbares Ventil, mindestens ein Rückschlagventil, mindestens ein Überdruckventil, mindestens eine Speicherkammer und/oder mindestens einen Drucksensor, umfassen.

In jedem elektromechanischen oder elektromagnetischen Radbremszylinder 14 ist eine Druckkammer ausgebildet, welche von einem verstellbaren ersten Bremskolben des elektromechanischen oder elektromagnetischen Radbremszylinders 14 begrenzt ist. Außerdem ist die jeweilige Druckkammer des mindestens einen elektromechanischen und/oder elektromagnetischen Radbremszylinders 14 des Bremssystems derart an dem mindestens einen Teilvolumen des mindestens einen hydraulischen Bremskreises 12 anbindbar/angebunden, dass der (die jeweilige Druckkammer begrenzende) erste Bremskolben mittels eines zumindest in dem jeweiligen Teilvolumen gesteigerten Drucks verstellbar ist/verstellt wird. Insbesondere kann der jeweilige erste Bremskolben des mindestens einen elektromechanischen und/oder elektromagnetischen Radbremszylinders 14 mittels des zumindest in dem jeweiligen Teilvolumen gesteigerten Drucks gegen eine Bremsscheibe 16 des ihm zugeordneten Rads 10 so gedrückt werden, dass ein erstes Bremsmoment (ungleich Null) einer Rotation des zugeordneten Rads 10 entgegenwirkt.

Der mindestens eine elektromechanische und/oder elektromagnetische Radbremszylinder 14 des Bremssystems weist auch jeweils einen elektromechanischen oder elektromagnetischen Aktor auf, welchem ein zweiter Bremskolben des jeweiligen elektromechanischen oder elektromagnetischen Radbremszylinders 14 zugeordnet ist. Der jeweilige zweite Bremskolben ist/wird mittels eines Betriebs des elektromechanischen oder elektromagnetischen Aktors verstellbar/verstellt. Insbesondere kann der jeweilige zweite Bremskolben mittels des Betriebs des (zugeordneten) elektromechanischen oder elektromagnetischen Aktors so gegen die Bremsscheibe 16 des zugeordneten Rads 10 gedrückt werden, dass ein zweites Bremsmoment (ungleich Null) alternativ oder zusätzlich zu dem ersten Bremsmoment der Rotation des zugeordneten Rads 10 entgegenwirkt.

Der mindestens eine elektromechanische oder elektromagnetische Radbremszylinder 14 des Bremssystems eignet sich somit sowohl für ein "hydraulisches Abbremsen" der Rotation des zugeordneten Rads 10 mittels des ersten Bremsmoments (ungleich Null) als auch für ein "elektromechanisches oder elektromagnetisches Abbremsen" der Rotation des zugeordneten Rads 10 mittels des zweiten Bremsmoments (ungleich Null). Vorzugsweise weist jeder elektromechanische und/oder elektromagnetische Radbremszylinder 14 ein eigenes Gehäuse auf, in welchem sowohl sein erster Bremskolben als auch sein zweiter Bremskolben verstellbar angeordnet sind. Bevorzugt wird eine Ausbildung des jeweiligen Gehäuses, bei welcher auch der elektromechanische oder elektromagnetische Aktor zumindest teilweise in dem zugeordneten Gehäuse ausgebildet ist. Realisierbar ist ein gutes Zusammenwirken des ersten Bremskolbens und des damit zusammenwirkenden zweiten Bremskolbens auch dann, wenn der erste Bremskolben und der damit zusammenwirkende zweite Bremskolben in einem gemeinsamen Bremssattel des jeweiligen elektromechanischen oder elektromagnetischen Radbremszylinders 14 verstellbar angeordnet sind.

Das Bremssystem der Fig. 1 weist auch eine motorisierte Bremsdruckaufbauvorrichtung 18 auf, welche derart ausgebildet ist, dass mittels eines Betriebs der motorisierten Bremsdruckaufbauvorrichtung 18 zumindest ein in dem mindestens einen Teilvolumen des mindestens einen hydraulischen Bremskreises 12, an welchem der mindestens eine elektromechanische oder elektromagnetische Radbremszylinder 14 angebunden ist, jeweils vorliegender Druck steigerbar ist/gesteigert wird. Die motorisierte Bremsdruckaufbauvorrichtung 18 kann somit zum autonomen (automatisierten) Verstellen/Drücken des mindestens einen ersten Bremskolbens des mindestens einen elektromechanischen und/oder elektromagnetischen Radbremszylinders 14 gegen die mindestens eine zugeordnete Bremsscheibe 16 eingesetzt werden.

Auf vorteilhafte Beispiele für die motorisierte Bremsdruckaufbauvorrichtung 18 wird unten noch genauer eingegangen.

Das Bremssystem der Fig. 1 weist pro Rad 10 des Fahrzeugs je den mindestens einen elektromechanischen und/oder elektromagnetischen Radbremszylinder 14 und/oder eine elektromechanische und/oder elektromagnetische Einzelradbremse 20 auf. Jedem Rad 10 des Fahrzeugs ist somit entweder sein elektromechanischer oder elektromagnetischer Radbremszylinder 14 oder seine elektromechanische und/oder elektromagnetische Einzelradbremse 20 zugeordnet. Unter der mindestens einen elektromechanischen und/oder elektromagnetischen Einzelradbremse 20 ist jeweils eine Reibungsbremse zu verstehen, deren Bremskolben mittels eines elektromechanischen oder elektromagnetischen Aktors der jeweiligen elektromechanischen oder elektromagnetischen Einzelradbremse 20 derart gegen die Bremsscheibe 16 des zugeordneten Rads 10 drückbar ist/gedrückt wird, dass ein Bremsmoment (ungleich Null) der Rotation des zugeordneten Rads 10 entgegenwirkt. Lediglich beispielhaft sind bei dem Bremssystem der Fig. 1 nur einer Fahrzeugachse des Fahrzeugs, wie z.B. einer Vorderachse des Fahrzeugs, zwei elektromechanische und/oder elektromagnetische Radbremszylinder 14 zugeordnet, während die mindestens eine andere Fahrzeugachse mit je zwei elektromechanischen und/oder elektromagnetischen Einzelradbremsen 20 bestückt ist. Es wird jedoch darauf hingewiesen, dass bei dem hier beschriebenen Bremssystem auch jedem Rad 10 des Fahrzeugs genau ein elektromechanischer oder elektromagnetischer Radbremszylinder 14 zugeordnet sein kann.

Das Bremssystem der Fig. 1 umfasst somit ein "autonomes hydraulisches Bremssystem" (realisiert durch den mindestens einen mittels der motorisierten Bremsdruckaufbauvorrichtung 18 verstellbaren ersten Bremskolben des mindestens einen elektromechanischen und/oder elektromagnetischen Radbremszylinders 14) und ein "autonomes elektromechanisches und/oder elektromagnetisches Bremssystem" (realisiert durch den mindestens einen mittels seines Aktors verstellbaren zweiten Bremskolben des mindestens einen elektromechanischen und/oder elektromagnetischen Radbremszylinders 14 und evtl. des mindestens einen Bremskolbens der mindestens einen elektromechanischen und/oder elektromagnetischen Einzelradbremse 20).

Sowohl das "autonome hydraulische Bremssystem" als auch das "autonome elektromechanische und/oder elektromagnetische Bremssystem" sind (zusammen oder allein) zum (radindividuellen) autonomen Abbremsen der Rotation des jeweils zugeordneten Rads 10 (evtl. mit Modulation des jeweils ausgeübten Bremsmoments) geeignet. Situationsabhängig können somit zum autonomen (automatisierten) Abbremsen des mit dem Bremssystem der Fig. 1 ausgestatteten Fahrzeugs wahlweise nur das "autonome hydraulische Bremssystem", nur das "autonome elektromechanische und/oder elektromagnetische Bremssystem" oder ein Gesamt-Bremssystem aus dem "autonomen hydraulischen Bremssystem" und dem "autonomen elektromechanischen und/oder elektromagnetischen Bremssystem" eingesetzt werden. Das Bremssystem eignet sich somit vorteilhaft für hochautonome (hochautomatisierte) Anwendungen, wie zum Beispiel eine ABS-Funktion (bzw. eine ESP-Funktion), Fahrerassistenzsysteme für ein teilautonomes oder vollautonomes (teilautomatisiertes oder vollautomatisiertes) Fahren des Fahrzeugs und Notbremsfunktionen zum autonomen (automatisierten) Abbremsen des Fahrzeugs bis zum Stillstand (und evtl. zum autonomen (automatisierten) Halten des Fahrzeugs in dem Stillstand).

Ein wesentlicher Vorteil des Bremssystems der Fig. 1 ist außerdem eine (vollständige) funktionale Redundanz des Bremssystems, welche es erlaubt, selbst bei einem vollständigen Ausfall eines der beiden autonomen Bremssysteme trotzdem eine hochautonome (hochautomatisierte) Anwendung mittels des anderen der beiden autonomen Bremssysteme fortzusetzen oder (vollständig) auszuführen. Die beiden autonomen Bremssysteme realisieren somit eine (vollständige) funktionale Redundanz, welche selbst bei einem Ausfall eines der beiden autonomen Bremssysteme ein autonomes (automatisiertes) Fahren noch ermöglicht. Beispielsweise kann eine teilautonome oder vollautonome (automatisierte oder teilautomatisierte) Fahrt des Fahrzeugs trotz des vollständigen Ausfalls eines der beiden autonomen Bremssysteme noch durch ein mittels des anderen der beiden autonomen Bremssysteme bewirktes autonomes oder teilautonomes Weiterfahren des Fahrzeugs fortgesetzt werden. Die beiden autonomen Bremssysteme realisieren damit den Vorteil der (vollständigen) funktionalen Redundanz so zuverlässig, dass trotz des vollständigen Ausfalls eines der beiden autonomen Bremssysteme problemlos auf eine Unterstützung des Fahrers des Fahrzeugs, beispielsweise durch eine Krafteinbringung des Fahrers in den mindestens einen Bremskreis 12, verzichtet werden kann. Das Bremssystem der Fig. 1 realisiert somit eine "autonome Rückfallebene", welche trotz des vollständigen Ausfalls eines der beiden autonomen Bremssysteme eine weitere Ausführbarkeit von hochautonomen (hochautomatisierten) Anwendungen ermöglicht. Ein Rückfall des Bremssystems in eine mechanische Rückfallebene kann somit vermieden werden.

Lediglich beispielhaft weist das Bremssystem der Fig. 1 einen an dem mindestens einen Bremskreis 12 angebundenen Hauptbremszylinder 22 auf, in welchem eine Drucksteigerung mittels einer Betätigung eines an dem Hauptbremszylinder 22 angebundenen (nicht dargestellten) Bremsbetätigungselements durch einen Fahrer des Fahrzeugs bewirkbar ist. Mittels der Drucksteigerung in dem Hauptbremszylinder 22 kann der mindestens eine erste Bremskolben des mindestens einen elektromechanischen und/oder elektromagnetischen Radbremszylinders 14 auch "manuell" mittels einer Fahrerbremskraft des Fahrers verstellt werden. Der Fahrer hat somit selbst bei einem Bordnetzausfall noch die Möglichkeit, mittels seiner Fahrerbremskraft ein Abbremsen seines Fahrzeugs aktiv zu bewirken. Es wird jedoch darauf hingewiesen, dass das Bremssystem aufgrund seiner (vollständigen) funktionalen Redundanz keine "Fahrerschnittstelle" benötigt. Deshalb kann auf die "Fahrerschnittstelle", bzw. den Hauptbremszylinder 22, auch problemlos verzichtet werden.

Vorzugsweise ist die motorisierte Bremsdruckaufbauvorrichtung 18 des mit dem Hauptbremszylinder 22 ausgebildeten Bremssystems ein dem Hauptbremszylinder 22 vorgelagerter elektromechanischer Bremskraftverstärker (wie z.B. ein iBooster, ein eBooster, ein elektronischer Booster, ein eBKV, ein elektronischer Bremskraftverstärker). Für eine Ausbildung einer motorisierten Bremsdruckaufbauvorrichtung 18 eines hauptbremszylinderlosen Bremssystems werden eine motorisierte Kolben-Zylinder-Vorrichtung (Plungervorrichtung, Integrated Power Brake, IPB) und/oder mindestens eine Pumpe bevorzugt. Somit können kostengünstige und bereits vielfältig eingesetzte Geräte als die motorisierten Bremsdruckaufbauvorrichtungen 18 eingesetzt werden.

Als optionale Weiterbildung hat das Bremssystem der Fig. 1 auch mindestens eine Steuervorrichtung 24 und 26. Die mindestens eine Steuervorrichtung 24 und 26 ist jeweils derart ausgebildet, dass die mindestens eine Steuervorrichtung 24 und 26 zumindest zeitweise in einem autonomen Bremsmodus betreibbar ist, in welchem zumindest die motorisierte Bremsdruckaufbauvorrichtung 18, die mindestens eine elektromechanische und/oder elektromagnetische Einzelradbremse 20 und/oder der jeweilige elektromechanische oder elektromagnetische Aktor des mindestens einen elektromechanischen und/oder elektromagnetischen Radbremszylinders 14 mittels der mindestens einen Steuervorrichtung 24 und 26 so ansteuerbar sind, dass das Fahrzeug mittels des Betriebs der motorisierten Bremsdruckaufbauvorrichtung 18 und/oder mittels eines Betriebs der mindestens einen elektromechanischen und/oder elektromagnetischen Einzelradbremse 20 und/oder des mindestens einen elektromechanischen und/oder elektromagnetischen Aktors autonom abbremsbar ist/abgebremst wird.

Die mindestens eine in dem autonomen Bremsmodus vorliegende Steuervorrichtung 24 und 26 kann zusätzlich dazu ausgelegt sein, das Fahrzeug primär mittels des Betriebs der mindestens einen elektromechanischen und/oder elektromagnetischen Einzelradbremse 20 und/oder des mindestens einen elektromechanischen und/oder elektromagnetischen Aktors des mindestens einen elektromechanischen und/oder elektromagnetischen Radbremszylinders 14 (d.h. mittels des "autonomen elektromechanischen und/oder elektromagnetischen Bremssystems") autonom abzubremsen. Das "autonome elektromechanische und/oder elektromagnetische Bremssystem" wird somit als "Master-Bremssystem" oder als "primäres Bremssystem" "im Normalfall" zum (radindividuellen) autonomen Abbremsen der Rotation des jeweils zugeordneten Rads 10 (evtl. mit Modulation des jeweils ausgeübten Bremsmoments) eingesetzt. In diesem Fall ist die mindestens eine Steuervorrichtung 24 und 26 dazu ausgelegt, die motorisierte Bremsdruckaufbauvorrichtung 18 (bzw. das "autonome hydraulische Bremssystem") nur dann zum (radindividuellen) autonomen Abbremsen des Fahrzeugs (evtl. mit Modulation des jeweils ausgeübten Bremsmoments) einzusetzen, wenn eine Funktionsbeeinträchtigung der mindestens einen elektromechanischen und/oder elektromagnetischen Einzelradbremse 20 und/oder des mindestens einen elektromechanischen und/oder elektromagnetischen Aktors des mindestens einen elektromechanischen und/oder elektromagnetischen Radbremszylinders 14 festgestellt ist und/oder wenn eine aktuell maximal bewirkbare Gesamt-Bremsleistung der mindestens einen elektromechanischen und/oder elektromagnetischen Einzelradbremse 20 und des mindestens einen elektromechanischen und/oder elektromagnetischen Aktors des mindestens einen elektromechanischen und/oder elektromagnetischen Radbremszylinders 14 nicht ausreichend zum autonomen Abbremsen des Fahrzeugs innerhalb einer vorgegebenen Wegstreckt und/oder innerhalb eines vorgegebenen Zeitintervalls ist. Das "autonome hydraulische Bremssystem" dient damit als "Slave-Bremssystem" oder als "sekundäres Bremssystem" "im Fehlerfall" zur Überbrückung der Funktionsbeeinträchtigung des "autonomen elektromechanischen und/oder elektromagnetisches Bremssystems" und/oder "im Extremfall" zur Unterstützung des "autonomen elektromechanischen und/oder elektromagnetisches Bremssystems". Somit liegt selbst während eines autonomen Bremsens (z.B. für ein automatisiertes oder teilautomatisiertes Fahren) eine hohe Redundanz vor.

In der Ausführungsform der Fig. 1 umfasst das Bremssystem eine erste Steuervorrichtung 24 und eine zweite Steuervorrichtung 26 (als die mindestens eine Steuervorrichtung 24 und 26). Die erste Steuervorrichtung 24 dient als "Master-Steuervorrichtung" zum Ansteuern des mindestens einen elektromechanischen und/oder elektromagnetischen Aktors des mindestens einen elektromechanischen und/oder elektromagnetischen Radbremszylinders 14 und evtl. der mindestens einen elektromechanischen und/oder elektromagnetischen Einzelradbremse 20 (mittels mindestens eines ersten Steuersignals 24a), während die motorisierte Bremsdruckaufbauvorrichtung 18 (mittels mindestens eines zweiten Steuersignals 26a) von der als "Slave-Steuervorrichtung" eingesetzten zweiten Steuervorrichtung 26 steuerbar ist/gesteuert wird. Somit ist auch die Steuerung des Bremssystems der Fig. 1 mittels der beiden Steuervorrichtungen 24 und 26 redundant ausgebildet. Die beiden Steuervorrichtungen 24 und 26 können beispielsweise über eine Kommunikationseinrichtung 28 miteinander kommunizieren. Es wird jedoch darauf hingewiesen, dass eine Ausstattung des Bremssystems mit der zweiten Steuervorrichtung 26 optional ist. Alternativ können die Bremssystemkomponenten des Bremssystems auch alle mittels einer einzigen Steuervorrichtung 24 ansteuerbar sein.

Fig. 2 zeigt eine schematische Darstellung einer Ausführungsform eines weiteren erfindungsgemäßen Bremssystems.

Das in Fig. 2 schematisch dargestellte Bremssystem unterscheidet sich von der zuvor erläuterten Ausführungsform lediglich darin, dass das Bremssystem zwei Bremskreise 12a und 12b umfasst, wobei mindestens ein hydraulischer Radbremszylinder 30, welcher jeweils einem Rad 10 des Fahrzeugs zugeordnet ist, jeweils an je einem Teilvolumen des mindestens einen hydraulischen Bremskreises 12a und 12b angebunden ist. Außerdem weist das Bremssystem je eine elektromechanische und/oder elektromagnetische Einzelradbremse 20 pro Rad des Fahrzeugs auf. Optionaler Weise entspricht bei dem Bremssystem der Fig. 2 die Anzahl der hydraulischen Radbremszylinder 30 der Anzahl der Räder 10 des Fahrzeugs. Deshalb kann bei der Ausführungsform der Fig. 2 auf jede Bremsscheibe 16 jedes Rads 10 des Fahrzeugs sowohl mittels eines Bremskolbens des zugeordneten hydraulischen Radbremszylinders 30 ein Bremsmoment (ungleich Null) als auch mittels des Bremskolbens der zugeordneten elektromechanischen oder elektromagnetischen Einzelradbremse 20 ein weiteres Bremsmoment (ungleich Null) ausgeübt werden. Der in Fig. 2 wiedergegebene Bremssystemtyp ist jedoch nicht auf eine bestimmte Anzahl von Bremskreisen 12a und 12b oder eine spezielle Anzahl von hydraulischen Radbremszylinders 30 gleich der Anzahl der Räder 10 des Fahrzeugs festgelegt.

Auch das Bremssystem der Fig. 2 umfasst ein "autonomes hydraulisches Bremssystem" (realisiert durch den mindestens einen mit der motorisierten Bremsdruckaufbauvorrichtung 18 zusammenwirkenden hydraulischen Radbremszylinder 30) und ein "autonomes elektromechanisches und/oder elektromagnetisches Bremssystem" (realisiert durch die mittels ihrer Aktoren verstellbaren Bremskolben der elektromechanischen und/oder elektromagnetischen Einzelradbremsen 20). Es bietet somit alle Vorteile der zuvor erläuterten Ausführungsform. Beispielsweise kann auch bei dem Bremssystem der Fig. 2 das "autonome elektromechanische und/oder elektromagnetische Bremssystem" als "Master-Bremssystem" oder als "primäres Bremssystem" "im Normalfall" eingesetzt werden, während das "autonome hydraulische Bremssystem" als "Slave-Bremssystem" oder als "sekundäres Bremssystem" lediglich "im Fehlerfall" zur Überbrückung einer Funktionsbeeinträchtigung des "autonomen elektromechanischen und/oder elektromagnetisches Bremssystems" und/oder "im Extremfall" zur Unterstützung des "autonomen elektromechanischen und/oder elektromagnetisches Bremssystems" genutzt wird. Bezüglich weiterer Merkmale des Bremssystems der Fig. 2 wird deshalb auf die oberen Erläuterungen verwiesen.

Jedes der Bremssysteme der Fig. 1 und 2 kann als ein symbiogenetisches hydraulisch-elektromechanisches (und/oder hydraulisch-elektromagnetisches) Bremssystem mit einer (vollständigen) funktionalen Redundanz bezeichnet werden. Jedes dieser Bremssysteme umfasst zwei unabhängige autonome Bremssysteme (d.h. das "autonome hydraulische Bremssystem" und das "autonome elektromechanische und/oder elektromagnetische Bremssystem"), wobei sich jedes der autonomen Bremssysteme zur autonomen Ausführung von (radindividuellen) Verzögerungsfunktionen und (radindividuellen) Stabilisierungsfunktionen eignet. Die Verwendung des "autonomen elektromechanischen und/oder elektromagnetischen Bremssystems" als "Master-Bremssystem" oder als "primäres Bremssystem" zum autonomen Bremsen "im Normalfall" kann zur Umwandlung von kinetischer Energie des abgebremsten Fahrzeugs in elektrische Energie genutzt werden. Aufgrund der zusätzlichen Verwendbarkeit des "autonomen hydraulischen Bremssystems" als "Slave-Bremssystem" oder als "sekundäres Bremssystem" zur Unterstützung des "autonomen elektromechanischen und/oder elektromagnetisches Bremssystems" "im Extremfall" ist es ausreichend, wenn der mindestens eine elektromechanische und/oder elektromagnetische Radbremszylinder 14 und/oder die mindestens eine elektromechanische und/oder elektromagnetische Einzelradbremsen 20 lediglich für eine maximal bewirkbare Gesamt-Bremsleistung unter einer zum schnellen und verlässlichen Abbremsen des Fahrzeugs "im Extremfall" notwendigen Soll-Bremsleistung ausgelegt sind. Wie unten genauer erläutert wird, kann selbst eine relativ hohe Soll-Bremsleistung (bzw. ein signifikant hoher Gesamt-Reibwert) durch eine Unterstützung des "autonomen elektromechanischen und/oder elektromagnetisches Bremssystems" mittels des "autonomen hydraulischen Bremssystems" bewirkt werden.

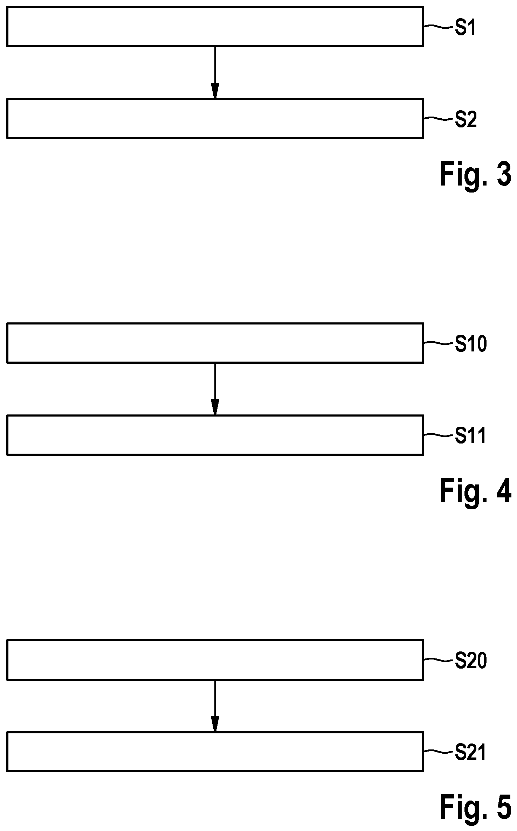

Fig. 3 zeigt ein Flussdiagramm zum Erläutern einer Ausführungsform des Herstellungsverfahrens für einen elektromechanischen oder elektromagnetischen Radbremszylinder.

In einem Verfahrensschritt S1 wird eine Druckkammer in dem elektromechanischen oder elektromagnetischen Radbremszylinder, welche von einem verstellbaren ersten Bremskolben des elektromechanischen oder elektromagnetischen Radbremszylinders begrenzt ist, derart ausgebildet, dass die Druckkammer an einem Teilvolumen des mindestens einen hydraulischen Bremskreises des Bremssystems anbindbar ist und der erste Bremskolben mittels eines in zumindest dem Teilvolumen gesteigerten Drucks verstellbar ist/verstellt wird. Die Druckkammer und der erste Bremskolben können z.B. gleich/ähnlich einer "Druckkammer" und einem "verstellbaren Bremskolben" in einem hydraulischen Radbremszylinder ausgebildet werden.

Außerdem wird in einem Verfahrensschritt S2 ein elektromechanischer oder elektromagnetischer Aktor derart ausgebildet, dass ein zweiter Bremskolben des elektromechanischen oder elektromagnetischen Radbremszylinders mittels eines Betriebs des elektromechanischen oder elektromagnetischen Aktors verstellbar ist/verstellt wird. Der elektromechanische oder elektromagnetische Aktor und der zweite Bremskolben können z.B. gleich/ähnlich einem "Aktor" und einem "verstellbaren Bremskolben" in einer elektromechanischen und/oder elektromagnetischen Einzelradbremse ausgebildet werden. Bevorzugt werden die Druckkammer, der erste Bremskolben, der elektromechanische oder elektromagnetische Aktor und der zweite Bremskolben in einem gemeinsamen Gehäuse des elektromechanischen oder elektromagnetischen Radbremszylinders ausgebildet.

Die Verfahrensschritte S1 und S2 können in beliebiger Reihenfolge, zeitlich überlappend und/oder gleichzeitig ausgeführt werden.

Fig. 4 zeigt ein Flussdiagramm zum Erläutern einer Ausführungsform eines erfindungsgemäßen Verfahrens zum autonomen Abbremsen eines Fahrzeugs.

Zum Ausführen des hier beschriebenen Verfahrens kann beispielsweise das Bremssystem der Fig. 1 eingesetzt werden. Eine Ausführbarkeit des Verfahrens in jedoch weder auf diesen Bremssystemtyp, noch auf einen bestimmten Fahrzeugtyp/Kraftfahrzeugtyp des Fahrzeugs/Kraftfahrzeugs limitiert.

Jeder der beiden nachfolgenden Verfahrensschritte S10 und S11 wird zumindest manchmal zum autonomen Abbremsen des Fahrzeugs ausgeführt:
Als Verfahrensschritt S10 wird eine an mindestens einem hydraulischen Bremskreis angebundene motorisierte Bremsdruckaufbauvorrichtung eines Bremssystems des Fahrzeugs derart betrieben, dass zumindest ein in mindestens einem Teilvolumen des mindestens einen hydraulischen Bremskreises jeweils vorliegender Druck gesteigert wird, wobei an dem mindestens einen Teilvolumen des mindestens einen hydraulischen Bremskreises mindestens einer der oben beschriebenen elektromechanischen oder elektromagnetischen Radbremszylinder, welcher jeweils einem Rad des Fahrzeugs zugeordnet ist, so angebunden ist, dass das Fahrzeug zumindest teilweise mittels eines Betriebs der motorisierten Bremsdruckaufbauvorrichtung autonom abgebremst wird.

Als Verfahrensschritt S11 wird mindestens eine elektromechanische und/oder elektromagnetische Einzelradbremse und/oder der jeweilige elektromechanische oder elektromagnetische Aktors des mindestens einen elektromechanischen und/oder elektromagnetischen Radbremszylinders pro Rad des Fahrzeugs derart betrieben, dass das Fahrzeug zumindest teilweise mittels eines Betriebs der mindestens einen elektromechanischen und/oder elektromagnetischen Einzelradbremse und/oder des mindestens einen elektromechanischen und/oder elektromagnetischen Aktors autonom abgebremst wird.

Zum autonomen Abbremsen des Fahrzeugs/Kraftfahrzeugs können somit nur der Verfahrensschritt S10, nur der Verfahrensschritt S11 oder beide Verfahrensschritte S10 und S11 gleichzeitig ausgeführt werden.

Fig. 5 zeigt ein Flussdiagramm zum Erläutern einer Ausführungsform eines weiteren erfindungsgemäßen Verfahrens zum autonomen Abbremsen eines Fahrzeugs.

Zum Ausführen des hier beschriebenen Verfahrens kann beispielsweise das Bremssystem der Fig. 2 eingesetzt werden. Eine Ausführbarkeit des Verfahrens in jedoch weder auf diesen Bremssystemtyp, noch auf einen bestimmten Fahrzeugtyp/Kraftfahrzeugtyp des Fahrzeugs/Kraftfahrzeugs limitiert.

Jeder der beiden nachfolgenden Verfahrensschritte S20 und S21 wird zumindest manchmal zum autonomen Abbremsen des Fahrzeugs ausgeführt:
Als Verfahrensschritt S20 wird eine an mindestens einem hydraulischen Bremskreis angebundene motorisierte Bremsdruckaufbauvorrichtung eines Bremssystems des Fahrzeugs derart betrieben, dass zumindest ein in mindestens einem Teilvolumen des mindestens einen hydraulischen Bremskreises jeweils vorliegender Druck gesteigert wird, wobei an dem mindestens einen Teilvolumen des mindestens einen hydraulischen Bremskreises mindestens ein hydraulischer Radbremszylinder, welcher jeweils einem Rad des Fahrzeugs zugeordnet ist, so angebunden ist, dass das Fahrzeug zumindest teilweise mittels eines Betriebs der motorisierten Bremsdruckaufbauvorrichtung autonom abgebremst wird.

Außerdem wird als Verfahrensschritt S21 mindestens eine elektromechanische und/oder elektromagnetische Einzelradbremse pro Rad des Fahrzeugs derart betrieben, dass das Fahrzeug zumindest teilweise mittels eines Betriebs der mindestens einen elektromechanischen und/oder elektromagnetischen Einzelradbremse autonom abgebremst wird.

Zum autonomen Abbremsen des Fahrzeugs/Kraftfahrzeugs können somit nur der Verfahrensschritt S20, nur der Verfahrensschritt S21 oder beide Verfahrensschritte S20 und S21 gleichzeitig ausgeführt werden.

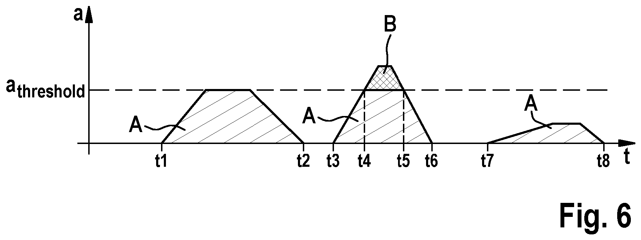

Fig. 6 zeigt ein Koordinatensystem zum Erläutern einer Weiterbildung der in Fig. 4 und Fig. 5 schematisch wiedergegebenen Verfahren. In dem Koordinatensystem der Fig. 6 ist eine Abszisse eine Zeitachse t, während eine Ordinate eine Fahrzeugverzögerung a anzeigt.

Bei der hier beschriebenen Weiterbildung der in Fig. 4 und Fig. 5 schematisch wiedergegebenen Verfahren wird das Fahrzeug primär mittels des Betriebs der mindestens einen elektromechanischen und/oder elektromagnetischen Einzelradbremse und/oder des mindestens einen elektromechanischen und/oder elektromagnetischen Aktors (d.h. durch Ausführen des Verfahrensschritts S11 oder S21) autonom abgebremst. Dies ist mittels der Schraffierung A zwischen den Zeiten t1 und t2, t3 und t4, t5 und t6, sowie t7 und t8 angezeigt. Vorzugsweise können der mindestens einen elektromechanischen und/oder elektromagnetischen Einzelradbremse und/oder des mindestens einen elektromechanischen und/oder elektromagnetischen Aktors zusätzlich zur Umwandlung von kinetischer Energie des abzubremsenden Fahrzeugs in elektrische Energie genutzt werden.

Wenn jedoch, wie zwischen den Zeiten t3 und t4, eine aktuell maximal bewirkbare Gesamt-Bremsleistung der mindestens einen elektromechanischen und/oder elektromagnetischen Einzelradbremse und des mindestens einen elektromechanischen und/oder elektromagnetischen Aktors nicht ausreichend zum autonomen Abbremsen des Fahrzeugs innerhalb einer vorgegebenen Wegstrecke und/oder innerhalb eines vorgegebenen Zeitintervalls ist, so wird auch die motorisierte Bremsdruckaufbauvorrichtung (durch zusätzliches Ausführen des Verfahrensschritts S10 oder S20) zum autonomen Abbremsen des Fahrzeugs eingesetzt (Schraffierung B). Ist z.B. zum autonomen Abbremsen des Fahrzeugs innerhalb der vorgegebenen Wegstrecke und/oder innerhalb des vorgegebenen Zeitintervalls zumindest kurzzeitig eine Fahrzeugverzögerung a oberhalb einer mittels des alleinigen Ausführens des Verfahrensschritts S11 oder S21 maximal bewirkbare Fahrzeugverzögerung a_{threshold} notwendig, so kann die motorisierte Bremsdruckaufbauvorrichtung zum Überbrücken des "Extremfalls" eingesetzt werden. Die mittels des alleinigen Ausführens des Verfahrensschritts S11 oder S21 maximal bewirkbare Fahrzeugverzögerung a_{threshold} kann somit unter einer im "Extremfall" zu bewirkenden Fahrzeugverzögerung a liegen. Für die mindestens eine elektromechanische und/oder elektromagnetische Einzelradbremse und/oder den mindestens einen elektromechanischen und/oder elektromagnetischen Aktor können somit kostengünstige und platzsparende Geräte verwendet werden.

Die motorisierte Bremsdruckaufbauvorrichtung kann auch dann zum autonomen Abbremsen des Fahrzeugs eingesetzt werden, wenn eine Funktionsbeeinträchtigung der mindestens einen elektromechanischen und/oder elektromagnetischen Einzelradbremse und/oder des mindestens einen elektromechanischen und/oder elektromagnetischen Aktors festgestellt wird.

## Patentansprüche

1. Bremssystem für ein Fahrzeug mit:
mindestens einem hydraulischen Bremskreis (12, 12a, 12b);
mindestens einem elektromechanischen oder elektromagnetischen Radbremszylinder (14), welcher jeweils einem Rad (10) des Fahrzeugs zugeordnet ist und jeweils an je einem Teilvolumen des mindestens einen hydraulischen Bremskreises (12, 12a, 12b) angebunden ist, mit:
- einer in dem elektromechanischen oder elektromagnetischen Radbremszylinder (14) ausgebildeten Druckkammer, welche von einem verstellbaren ersten Bremskolben des elektromechanischen oder elektromagnetischen Radbremszylinders (14) begrenzt ist, und derart an dem jeweiligen Teilvolumen des mindestens einen hydraulischen Bremskreises (12, 12a, 12b) des Bremssystems angebunden ist, dass der erste Bremskolben mittels eines zumindest in dem jeweiligen Teilvolumen gesteigerten Drucks verstellbar ist;
- einem elektromechanischen oder elektromagnetischen Aktor; und
- einem zweiten Bremskolben des elektromechanischen oder elektromagnetischen Radbremszylinders (14), welcher mittels eines Betriebs des elektromechanischen oder elektromagnetischen Aktors verstellbar ist;
- einer motorisierten Bremsdruckaufbauvorrichtung (18), welche derart ausgebildet ist, dass mittels eines Betriebs der motorisierten Bremsdruckaufbauvorrichtung (18) zumindest der in dem mindestens einen Teilvolumen des mindestens einen hydraulischen Bremskreises (12, 12a, 12b) jeweils vorliegender Druck steigerbar ist,
**gekennzeichnet dadurch, dass**
das Bremssystem pro Rad (10) des Fahrzeugs je eine elektromechanische und/oder elektromagnetische Einzelradbremse (20) oder den mindestens einen elektromechanischen und/oder elektromagnetischen Radbremszylinder (14) aufweist,
wobei das Bremssystem mindestens eine Steuervorrichtung (24, 26) umfasst, welche jeweils derart ausgebildet ist, dass die mindestens eine Steuervorrichtung (24, 26) zumindest zeitweise in einem autonomen Bremsmodus betreibbar ist, in welchem zumindest die motorisierte Bremsdruckaufbauvorrichtung (18) und/oder die mindestens eine elektromechanische und/oder elektromagnetische Einzelradbremse (20) mittels der mindestens einen Steuervorrichtung (24, 26) so ansteuerbar sind, dass das Fahrzeug mittels des Betriebs der motorisierten Bremsdruckaufbauvorrichtung (18) und/oder mittels eines Betriebs der mindestens einen elektromechanischen und/oder elektromagnetischen Einzelradbremse (20) autonom abbremsbar ist,
wobei die mindestens eine in dem autonomen Bremsmodus vorliegende Steuervorrichtung (24, 26) dazu ausgelegt ist, das Fahrzeug primär mittels des Betriebs der mindestens einen elektromechanischen und/oder elektromagnetischen Einzelradbremse (20) autonom abzubremsen, und, die motorisierte Bremsdruckaufbauvorrichtung (18) nur dann zum autonomen Abbremsen des Fahrzeugs einzusetzen, wenn eine Funktionsbeeinträchtigung der mindestens einen elektromechanischen und/oder elektromagnetischen Einzelradbremse (20) festgestellt ist und/oder wenn eine aktuell maximal bewirkbare Gesamt-Bremsleistung der mindestens einen elektromechanischen und/oder elektromagnetischen Einzelradbremse (20) und des mindestens einen elektromechanischen und/oder elektromagnetischen Aktors nicht ausreichend zum autonomen Abbremsen des Fahrzeugs innerhalb einer vorgegebenen Wegstrecke und/oder innerhalb eines vorgegebenen Zeitintervalls ist.

2. Bremssystem nach Anspruch 1, wobei die mindestens eine Steuervorrichtung (24, 26) jeweils derart ausgebildet ist, dass die mindestens eine Steuervorrichtung (24, 26) zumindest zeitweise in einem autonomen Bremsmodus betreibbar ist, in welchem der jeweilige elektromechanische oder elektromagnetische Aktor des mindestens einen elektromechanischen und/oder elektromagnetischen Radbremszylinders (14) mittels der mindestens einen Steuervorrichtung (24, 26) so ansteuerbar sind, dass das Fahrzeug mittels des Betriebs der motorisierten Bremsdruckaufbauvorrichtung (18) und/oder mittels eines Betriebs der mindestens einen elektromechanischen und/oder elektromagnetischen Einzelradbremse (20) und/oder des mindestens einen elektromechanischen und/oder elektromagnetischen Aktors autonom abbremsbar ist.

3. Bremssystem nach Anspruch 2, wobei die mindestens eine in dem autonomen Bremsmodus vorliegende Steuervorrichtung (24, 26) dazu ausgelegt ist, das Fahrzeug primär mittels des Betriebs des mindestens einen elektromechanischen und/oder elektromagnetischen Aktors autonom abzubremsen, und, die motorisierte Bremsdruckaufbauvorrichtung (18) nur dann zum autonomen Abbremsen des Fahrzeugs einzusetzen, wenn eine Funktionsbeeinträchtigung des mindestens einen elektromechanischen und/oder elektromagnetischen Aktors festgestellt ist.

4. Bremssystem für ein Fahrzeug mit:
mindestens einem hydraulischen Bremskreis (12, 12a, 12b);
mindestens einem hydraulischen Radbremszylinder (30), welcher jeweils einem Rad (10) des Fahrzeugs zugeordnet ist und jeweils an je einem Teilvolumen des mindestens einen hydraulischen Bremskreises (12, 12a, 12b) angebunden ist;
einer motorisierten Bremsdruckaufbauvorrichtung (18), welche derart ausgebildet ist, dass mittels eines Betriebs der motorisierten Bremsdruckaufbauvorrichtung (18) zumindest ein in dem mindestens einen Teilvolumen des mindestens einen hydraulischen Bremskreises (12, 12a, 12b) jeweils vorliegender Druck steigerbar ist; und
mindestens einer weiteren motorisierten Vorrichtung (20);
wobei das Bremssystem je eine elektromechanische und/oder elektromagnetische Einzelradbremse (20) pro Rad (10) des Fahrzeugs als die mindestens eine weitere motorisierte Vorrichtung (20) aufweist,
und wobei das Bremssystem mindestens eine Steuervorrichtung (24, 26) umfasst, welche jeweils derart ausgebildet ist, dass die mindestens eine Steuervorrichtung (24, 26) zumindest zeitweise in einem autonomen Bremsmodus betreibbar ist, in welchem zumindest die motorisierte Bremsdruckaufbauvorrichtung (18) und/oder die mindestens eine elektromechanische und/oder elektromagnetische Einzelradbremse (20) mittels der mindestens einen Steuervorrichtung (24, 26) so ansteuerbar sind, dass das Fahrzeug mittels des Betriebs der motorisierten Bremsdruckaufbauvorrichtung (18) und/oder mittels eines Betriebs der mindestens einen elektromechanischen und/oder elektromagnetischen Einzelradbremse (20) autonom abbremsbar ist,
**dadurch gekennzeichnet, dass**
die mindestens eine in dem autonomen Bremsmodus vorliegende Steuervorrichtung (24, 26) dazu ausgelegt ist, das Fahrzeug primär mittels des Betriebs der mindestens einen elektromechanischen und/oder elektromagnetischen Einzelradbremse (20) autonom abzubremsen, und, die motorisierte Bremsdruckaufbauvorrichtung (18) nur dann zum autonomen Abbremsen des Fahrzeugs einzusetzen, wenn eine Funktionsbeeinträchtigung der mindestens einen elektromechanischen und/oder elektromagnetischen Einzelradbremse (20) festgestellt ist und/oder wenn eine aktuell maximal bewirkbare Gesamt-Bremsleistung der mindestens einen elektromechanischen und/oder elektromagnetischen Einzelradbremse (20) nicht ausreichend zum autonomen Abbremsen des Fahrzeugs innerhalb einer vorgegebenen Wegstrecke und/oder innerhalb eines vorgegebenen Zeitintervalls ist.

5. Bremssystem nach einem der Ansprüche 1 bis 4, wobei das Bremssystem einen an dem mindestens einen Bremskreis (12, 12a, 12b) angebundenen Hauptbremszylinder (22) aufweist, in welchem eine Drucksteigerung mittels einer Betätigung eines an dem Hauptbremszylinder (22) angebundenen Bremsbetätigungselements durch einen Fahrer des Fahrzeugs bewirkbar ist, und wobei die motorisierte Bremsdruckaufbauvorrichtung (18) ein dem Hauptbremszylinder (22) vorgelagerter elektromechanischer Bremskraftverstärker (18) ist.

6. Verfahren zum autonomen Abbremsen eines Fahrzeugs,
wobei die beiden nachfolgenden Schritte (S10 und S11) zum autonomen Abbremsen des Fahrzeugs ausgeführt werden:
Betreiben einer an mindestens einem hydraulischen Bremskreis (12, 12a, 12b) angebundenen motorisierten Bremsdruckaufbauvorrichtung (18) eines Bremssystems des Fahrzeugs derart, dass zumindest ein in mindestens einem Teilvolumen des mindestens einen hydraulischen Bremskreises (12, 12a, 12b) jeweils vorliegender Druck gesteigert wird, wobei an dem mindestens einen Teilvolumen des mindestens einen hydraulischen Bremskreises (12, 12a, 12b) mindestens ein elektromechanischer oder elektromagnetischer Radbremszylinder (14), welcher jeweils einem Rad (10) des Fahrzeugs zugeordnet ist, so angebunden ist, dass das Fahrzeug zumindest teilweise mittels eines Betriebs der motorisierten Bremsdruckaufbauvorrichtung (18) autonom abgebremst wird (S10), wobei der mindestens eine elektromechanische oder elektromagnetische Radbremszylinder (14) ausgebildet ist mit:
- einer in dem elektromechanischen oder elektromagnetischen Radbremszylinder (14) ausgebildeten Druckkammer, welche von einem verstellbaren ersten Bremskolben des elektromechanischen oder elektromagnetischen Radbremszylinders (14) begrenzt ist, und derart an dem jeweiligen Teilvolumen des mindestens einen hydraulischen Bremskreises (12, 12a, 12b) des Bremssystems angebunden ist, dass der erste Bremskolben mittels des zumindest in dem jeweiligen Teilvolumen gesteigerten Drucks verstellbar ist;
- einem elektromechanischen oder elektromagnetischen Aktor; und
- einem zweiten Bremskolben des elektromechanischen oder elektromagnetischen Radbremszylinders (14), welcher mittels eines Betriebs des elektromechanischen oder elektromagnetischen Aktors verstellbar ist; und
Betreiben mindestens einer elektromechanischen und/oder elektromagnetischen Einzelradbremse (20) und/oder des jeweiligen elektromechanischen oder elektromagnetischen Aktors des mindestens einen elektromechanischen und/oder elektromagnetischen Radbremszylinders (14) pro Rad (10) des Fahrzeugs derart, dass das Fahrzeug zumindest teilweise mittels eines Betriebs der mindestens einen elektromechanischen und/oder elektromagnetischen Einzelradbremse (20) und/oder des mindestens einen elektromechanischen und/oder elektromagnetischen Aktors autonom abgebremst wird (S11);
**gekennzeichnet durch** den Schritt,
dass das Fahrzeug primär mittels des Betriebs der mindestens einen elektromechanischen und/oder elektromagnetischen Einzelradbremse (20) und/oder des mindestens einen elektromechanischen und/oder elektromagnetischen Aktors (14) autonom abgebremst wird, und die motorisierte Bremsdruckaufbauvorrichtung (18) nur dann zum autonomen Abbremsen des Fahrzeugs eingesetzt wird, wenn eine Funktionsbeeinträchtigung der mindestens einen elektromechanischen und/oder elektromagnetischen Einzelradbremse (20) und/oder des mindestens einen elektromechanischen und/oder elektromagnetischen Aktors festgestellt wird und/oder wenn eine aktuell maximal bewirkbare Gesamt-Bremsleistung der mindestens einen elektromechanischen und/oder elektromagnetischen Einzelradbremse (20) und des mindestens einen elektromechanischen und/oder elektromagnetischen Aktors nicht ausreichend zum autonomen Abbremsen des Fahrzeugs innerhalb einer vorgegebenen Wegstrecke und/oder innerhalb eines vorgegebenen Zeitintervalls ist.

7. Verfahren zum autonomen Abbremsen eines Fahrzeugs,
wobei die beiden nachfolgenden Schritte (S20 und S21) zum autonomen Abbremsen des Fahrzeugs ausgeführt werden:
Betreiben einer an mindestens einem hydraulischen Bremskreis (12, 12a, 12b) angebundenen motorisierten Bremsdruckaufbauvorrichtung (18) eines Bremssystems des Fahrzeugs derart, dass zumindest ein in mindestens einem Teilvolumen des mindestens einen hydraulischen Bremskreises (12, 12a, 12b) jeweils vorliegender Druck gesteigert wird, wobei an dem mindestens einen Teilvolumen des mindestens einen hydraulischen Bremskreises (12, 12a, 12b) mindestens ein hydraulischer Radbremszylinder (30), welcher jeweils einem Rad (10) des Fahrzeugs zugeordnet ist, so angebunden ist, dass das Fahrzeug zumindest teilweise mittels eines Betriebs der motorisierten Bremsdruckaufbauvorrichtung (18) autonom abgebremst wird (S20); und
Betreiben mindestens einer elektromechanischen und/oder elektromagnetischen Einzelradbremse (20) pro Rad (10) des Fahrzeugs derart, dass das Fahrzeug zumindest teilweise mittels eines Betriebs der mindestens einen elektromechanischen und/oder elektromagnetischen Einzelradbremse (20) autonom abgebremst wird (S21),
**gekennzeichnet durch** den Schritt, dass
das Fahrzeug primär mittels des Betriebs der mindestens einen elektromechanischen und/oder elektromagnetischen Einzelradbremse (20) autonom abgebremst wird, und die motorisierte Bremsdruckaufbauvorrichtung (18) nur dann zum autonomen Abbremsen des Fahrzeugs eingesetzt wird, wenn eine Funktionsbeeinträchtigung der mindestens einen elektromechanischen und/oder elektromagnetischen Einzelradbremse (20) festgestellt wird und/oder wenn eine aktuell maximal bewirkbare Gesamt-Bremsleistung der mindestens einen elektromechanischen und/oder elektromagnetischen Einzelradbremse (20) nicht ausreichend zum autonomen Abbremsen des Fahrzeugs innerhalb einer vorgegebenen Wegstrecke und/oder innerhalb eines vorgegebenen Zeitintervalls ist.

## Claims

1. Brake system for a vehicle, comprising:
at least one hydraulic brake circuit (12, 12a, 12b);
at least one electromechanical or electromagnetic wheel brake cylinder (14) which is assigned in each case to a wheel (10) of the vehicle and is connected in each case to a respective partial volume of the at least one hydraulic brake circuit (12, 12a, 12b), comprising:
- a pressure chamber which is formed in the electromechanical or electromagnetic wheel brake cylinder (14), is delimited by an adjustable first brake piston of the electromechanical or electromagnetic wheel brake cylinder (14) and is connected to the respective partial volume of the at least one hydraulic brake circuit (12, 12a, 12b) of the brake system in such a way that the first brake piston can be adjusted by means of a pressure increased at least in the respective partial volume;
- an electromechanical or electromagnetic actuator; and
- a second brake piston of the electromechanical or electromagnetic wheel brake cylinder (14), which can be adjusted by means of operation of the electromechanical or electromagnetic actuator;
- a motorized brake pressure build-up device (18) which is formed in such a way that at least the pressure respectively present in the at least one partial volume of the at least one hydraulic brake circuit (12, 12a, 12b) can be increased by means of operation of the motorized brake pressure build-up device (18), **characterized in that** the brake system has a respective electromechanical and/or electromagnetic individual wheel brake (20) or the at least one electromechanical and/or electromagnetic wheel brake cylinder (14) for each wheel (10) of the vehicle,
wherein the brake system comprises at least one control device (24, 26) which is formed in each case in such a way that the at least one control device (24, 26) can be operated at least temporarily in an autonomous braking mode in which at least the motorized brake pressure build-up device (18) and/or the at least one electromechanical and/or electromagnetic individual wheel brake (20) can be actuated by means of the at least one control device (24, 26) such that the vehicle can be autonomously braked by means of the operation of the motorized brake pressure build-up device (18) and/or by means of operation of the at least one electromechanical and/or electromagnetic individual wheel brake (20),
wherein the at least one control device (24, 26) present in the autonomous braking mode is designed to autonomously brake the vehicle primarily by means of the operation of the at least one electromechanical and/or electromagnetic individual wheel brake (20) and to use the motorized brake pressure build-up device (18) to autonomously brake the vehicle only when a functional impairment of the at least one electromechanical and/or electromagnetic individual wheel brake (20) is established and/or when a currently maximum implementable total braking power of the at least one electromechanical and/or electromagnetic individual wheel brake (20) and the at least one electromechanical and/or electromagnetic actuator is not sufficient for autonomously braking the vehicle within a predefined distance and/or within a predefined time interval.

2. Brake system according to Claim 1, wherein the at least one control device (24, 26) is formed in such a way that the at least one control device (24, 26) can be operated at least temporarily in an autonomous braking mode in which the respective electromechanical or electromagnetic actuator of the at least one electromechanical and/or electromagnetic wheel brake cylinder (14) can be actuated by means of the at least one control device (24, 26) such that the vehicle can be autonomously braked by means of the operation of the motorized brake pressure build-up device (18) and/or by means of operation of the at least one electromechanical and/or electromagnetic individual wheel brake (20) and/or the at least one electromechanical and/or electromagnetic actuator.

3. Brake system according to Claim 2, wherein the at least one control device (24, 26) present in the autonomous braking mode is designed to autonomously brake the vehicle primarily by means of the operation of the at least one electromechanical and/or electromagnetic actuator and to use the motorized brake pressure build-up device (18) to autonomously brake the vehicle only when a functional impairment of at least one electromechanical and/or electromagnetic actuator is established.

4. Brake system for a vehicle, comprising:
at least one hydraulic brake circuit (12, 12a, 12b);
at least one hydraulic wheel brake cylinder (30) which is assigned in each case to a wheel (10) of the vehicle and is connected in each case to a respective partial volume of the at least one hydraulic brake circuit (12, 12a, 12b);
a motorized brake pressure build-up device (18) which is formed in such a way that at least one pressure respectively present in the at least one partial volume of the at least one hydraulic brake circuit (12, 12a, 12b) can be increased by means of operation of the motorized brake pressure build-up device (18); and
at least one further motorized device (20);
wherein the brake system has a respective electromechanical and/or electromagnetic individual wheel brake (20) for each wheel (10) of the vehicle as the at least one further motorized device (20),
and wherein the brake system comprises at least one control device (24, 26) which is formed in each case in such a way that the at least one control device (24, 26) can be operated at least temporarily in an autonomous braking mode in which at least the motorized brake pressure build-up device (18) and/or the at least one electromechanical and/or electromagnetic individual wheel brake (20) can be actuated by means of the at least one control device (24, 26) such that the vehicle can be autonomously braked by means of the operation of the motorized brake pressure build-up device (18) and/or by means of operation of the at least one electromechanical and/or electromagnetic individual wheel brake (20),
**characterized in that**
the at least one control device (24, 26) present in the autonomous braking mode is designed to autonomously brake the vehicle primarily by means of the operation of the at least one electromechanical and/or electromagnetic individual wheel brake (20), and to use the motorized brake pressure build-up device (18) to autonomously brake the vehicle only when a functional impairment of the at least one electromechanical and/or electromagnetic individual wheel brake (20) is established and/or when a currently maximum implementable total braking power of the at least one electromechanical and/or electromagnetic individual wheel brake (20) is not sufficient for autonomously braking the vehicle within a predefined distance and/or within a predefined time interval.

5. Brake system according to any of Claims 1 to 4, wherein the brake system has a master brake cylinder (22) which is connected to the at least one brake circuit (12, 12a, 12b) and in which an increase in pressure can be implemented by a driver of the vehicle by means of actuation of a brake actuating element connected to the master brake cylinder (22), and wherein the motorized brake pressure build-up device (18) is an electromechanical brake booster (18) upstream of the master brake cylinder (22).

6. Method for autonomously braking a vehicle,
wherein the two following steps (S10 and S11) are executed for autonomously braking the vehicle:
operating a motorized brake pressure build-up device (18), which is connected to at least one hydraulic brake circuit (12, 12a, 12b), of a brake system of the vehicle in such a way that at least one pressure respectively present in at least one partial volume of the at least one hydraulic brake circuit (12, 12a, 12b) is increased, wherein at least one electromechanical or electromagnetic wheel brake cylinder (14), which is assigned in each case to a wheel (10) of the vehicle, is connected to the at least one partial volume of the at least one hydraulic brake circuit (12, 12a, 12b) such that the vehicle is at least partially autonomously braked (S10) by means of operation of the motorized brake pressure build-up device (18), wherein the at least one electromechanical or electromagnetic wheel brake cylinder (14) is formed with:
- a pressure chamber which is formed in the electromechanical or electromagnetic wheel brake cylinder (14), is delimited by an adjustable first brake piston of the electromechanical or electromagnetic wheel brake cylinder (14) and is connected to the respective partial volume of the at least one hydraulic brake circuit (12, 12a, 12b) of the brake system in such a way that the first brake piston can be adjusted by means of the pressure increased at least in the respective partial volume;
- an electromechanical or electromagnetic actuator; and
- a second brake piston of the electromechanical or electromagnetic wheel brake cylinder (14), which can be adjusted by means of operation of the electromechanical or electromagnetic actuator; and
operating at least one electromechanical and/or electromagnetic individual wheel brake (20) and/or the respective electromechanical or electromagnetic actuator of the at least one electromechanical and/or electromagnetic wheel brake cylinder (14) for each wheel (10) of the vehicle in such a way that the vehicle is at least partially autonomously braked (S11) by means of operation of the at least one electromechanical and/or electromagnetic individual wheel brake (20) and/or the at least one electromechanical and/or electromagnetic actuator;
**characterized by** the step
that the vehicle is autonomously braked primarily by means of the operation of the at least one electromechanical and/or electromagnetic individual wheel brake (20) and/or the at least one electromechanical and/or electromagnetic actuator (14), and the motorized brake pressure build-up device (18) is used to autonomously brake the vehicle only when a functional impairment of the at least one electromechanical and/or electromagnetic individual wheel brake (20) and/or the at least one electromechanical and/or electromagnetic actuator is established and/or when a currently maximum implementable total braking power of the at least one electromechanical and/or electromagnetic individual wheel brake (20) and the at least one electromechanical and/or electromagnetic actuator is not sufficient for autonomously braking the vehicle within a predefined distance and/or within a predefined time interval.

7. Method for autonomously braking a vehicle,
wherein the two following steps (S20 and S21) are executed for autonomously braking the vehicle:
operating a motorized brake pressure build-up device (18), which is connected to at least one hydraulic brake circuit (12, 12a, 12b), of a brake system of the vehicle in such a way that at least one pressure respectively present in at least one partial volume of the at least one hydraulic brake circuit (12, 12a, 12b) is increased, wherein at least one hydraulic wheel brake cylinder (30), which is in each case assigned to a wheel (10) of the vehicle, is connected to the at least one partial volume of the at least one hydraulic brake circuit (12, 12a, 12b) such that the vehicle is at least partially autonomously braked (S20) by means of operation of the motorized brake pressure build-up device (18); and
operating at least one electromechanical and/or electromagnetic individual wheel brake (20) for each wheel (10) of the vehicle in such a way that the vehicle is at least partially autonomously braked (S21) by means of operation of the at least one electromechanical and/or electromagnetic individual wheel brake (20),
**characterized by** the step that
the vehicle is autonomously braked primarily by means of the operation of the at least one electromechanical and/or electromagnetic individual wheel brake (20), and the motorized brake pressure build-up device (18) is used to autonomously brake the vehicle only when a functional impairment of the at least one electromechanical and/or electromagnetic individual wheel brake (20) is established and/or when a currently maximum implementable total braking power of the at least one electromechanical and/or electromagnetic individual wheel brake (20) is not sufficient for autonomously braking the vehicle within a predefined distance and/or within a predefined time interval.

## Revendications

1. Système de freinage pour un véhicule, comprenant :
au moins un circuit hydraulique (12, 12a, 12b) de freinage ;
au moins un cylindre (14) électromécanique ou électromagnétique de freinage de roue, qui est associé à une roue respective (10) du véhicule et qui est relié à un volume partiel respectif dudit au moins un circuit hydraulique (12, 12a, 12b) de freinage, comprenant :
- une chambre de pression formée dans le cylindre (14) électromécanique ou électromagnétique de freinage de roue, qui est délimitée par un premier piston de frein réglable du cylindre (14) électromécanique ou électromagnétique de freinage de roue, et qui est reliée au volume partiel respectif dudit au moins un circuit hydraulique (12, 12a, 12b) de freinage du système de freinage de telle manière que le premier piston de frein soit réglable au moyen d'une pression accrue au moins dans le volume partiel respectif ;
- un actionneur électromécanique ou électromagnétique ; et
- un deuxième piston de frein du cylindre (14) électromécanique ou électromagnétique de freinage de roue, qui est réglable au moyen de l'actionnement d'un actionneur électromécanique ou électromagnétique ;
- un dispositif motorisé (18) de génération de pression de freinage qui est conçu de telle sorte que, par l'actionnement du dispositif motorisé (18) de génération de pression de freinage, au moins la pression présente dans ledit au moins un volume partiel dudit au moins un circuit hydraulique (12, 12a, 12b) de freinage puisse être augmentée, **caractérisé en ce que** le système de freinage comprend, pour chaque roue (10) du véhicule, un frein de roue individuel (20) électromécanique et/ou électromagnétique ou ledit au moins un cylindre (14) électromécanique ou électromagnétique de freinage de roue,
le système de freinage comprenant au moins un dispositif de commande (24, 26), chacun étant conçu de telle sorte que ledit au moins un dispositif de commande (24, 26) soit apte à fonctionner au moins temporairement dans un mode de freinage autonome, dans lequel au moins le dispositif motorisé (18) de génération de pression de freinage et/ou ledit au moins un frein de roue individuel (20) électromécanique et/ou électromagnétique sont aptes à être commandés au moyen dudit au moins un dispositif de commande (24, 26) de sorte que le véhicule puisse être freiné de manière autonome par un actionnement du dispositif motorisé (18) de génération de pression de freinage et/ou par un actionnement dudit au moins un frein de roue individuel (20) électromécanique et/ou électromagnétique,
ledit au moins un dispositif de commande (24, 26) présent en mode de freinage autonome étant conçu pour freiner le véhicule de manière autonome, en premier lieu, par l'actionnement dudit au moins un frein de roue individuel (20) électromécanique et/ou électromagnétique, et pour n'utiliser le dispositif motorisé (18) de génération de pression de freinage pour le freinage autonome du véhicule que lorsqu'une altération du fonctionnement dudit au moins un frein de roue individuel (20) électromécanique et/ou électromagnétique est détectée et/ou lorsqu'une puissance de freinage totale maximale actuellement atteignable dudit au moins un frein de roue individuel (20) électromécanique et/ou électromagnétique et dudit au moins un actionneur électromécanique et/ou électromagnétique n'est pas suffisante pour freiner le véhicule de manière autonome sur une distance prédéfinie et/ou dans un intervalle de temps prédéfini.

2. Système de freinage selon la revendication 1, dans lequel ledit au moins un dispositif de commande (24, 26) est conçu de telle sorte que ledit au moins un dispositif de commande (24, 26) est apte à être utilisé au moins temporairement dans un mode de freinage autonome, dans lequel l'actionneur électromécanique ou électromagnétique respectif dudit au moins un cylindre (14) électromécanique ou électromagnétique de freinage de roue est apte à être commandé au moyen dudit au moins un dispositif de commande (24, 26) de telle sorte que le véhicule puisse être freiné de manière autonome par l'actionnement du dispositif motorisé (18) de génération de pression de freinage et/ou par l'actionnement dudit au moins un frein de roue individuel (20) électromécanique et/ou électromagnétique et/ou dudit au moins un actionneur électromécanique et/ou électromagnétique.

3. Système de freinage selon la revendication 2, dans lequel ledit au moins un dispositif de commande (24, 26) présent dans le mode de freinage autonome est conçu pour freiner le véhicule de manière autonome, principalement par l'actionnement dudit au moins un actionneur électromécanique et/ou électromagnétique, et pour n'utiliser le dispositif motorisé (18) de génération de pression de freinage pour le freinage autonome du véhicule que lorsqu'une altération du fonctionnement dudit au moins un actionneur électromécanique et/ou électromagnétique est détectée.

4. Système de freinage pour un véhicule, comprenant :
au moins un circuit hydraulique (12, 12a, 12b) de freinage ;
au moins un cylindre hydraulique (30) de freinage de roue, qui est associé à chaque roue (10) du véhicule et qui est relié à un volume partiel respectif dudit au moins un circuit hydraulique (12, 12a, 12b) de freinage ;
un dispositif motorisé (18) de génération de pression de freinage, qui est conçu de telle sorte que, par l'actionnement du dispositif motorisé (18) de génération de pression de freinage, au moins une pression présente dans le volume partiel respectif dudit au moins un circuit hydraulique (12, 12a, 12b) de freinage est apte à être augmentée ; et
au moins un autre dispositif motorisé (20) ;
le système de freinage comprenant un frein de roue individuel (20) électromécanique et/ou électromagnétique sur chaque roue (10) du véhicule en tant que ledit au moins un autre dispositif motorisé (20),
et le système de freinage comprenant au moins un dispositif de commande (24, 26) qui est conçu de telle sorte que ledit au moins un dispositif de commande (24, 26) soit utilisable au moins temporairement dans un mode de freinage autonome, dans lequel au moins le dispositif motorisé (18) de génération de pression de freinage et/ou ledit au moins un frein de roue individuel (20) électromécanique et/ou électromagnétique est apte à être commandé au moyen dudit au moins un dispositif de commande (24, 26) de telle sorte que le véhicule puisse être freiné de manière autonome par l'actionnement du dispositif motorisé (18) de génération de pression de freinage et/ou par l'actionnement d'au moins un frein de roue individuel (20) électromécanique et/ou électromagnétique,
**caractérisé en ce que**
ledit au moins un dispositif de commande (24, 26) présent dans le mode de freinage autonome est conçu pour freiner le véhicule de manière autonome, principalement par l'actionnement dudit au moins un frein de roue individuel (20) électromécanique et/ou électromagnétique, et pour n'utiliser le dispositif motorisé (18) de génération de pression de freinage pour le freinage autonome du véhicule que lorsqu'une altération du fonctionnement d'au moins un frein de roue individuel (20) électromécanique et/ou électromagnétique est détectée et/ou lorsqu'une puissance de freinage totale maximale actuellement atteignable dudit au moins un frein de roue individuel (20) électromécanique et/ou électromagnétique n'est pas suffisante pour freiner le véhicule de manière autonome sur une distance prédéfinie et/ou dans un intervalle de temps prédéfini.

5. Système de freinage selon l'une des revendications 1 à 4, le système de freinage comprenant un maître-cylindre de frein (22) relié à au moins un circuit de freinage (12, 12a, 12b), dans lequel une augmentation de pression est susceptible d'être provoquée par un conducteur du véhicule au moyen d'un actionnement d'un élément d'actionnement de frein relié au maître-cylindre de frein (22), et le dispositif motorisé (18) de génération de pression de freinage étant un servofrein électromécanique (18) monté en amont du maître-cylindre de frein (22).

6. Procédé de freinage autonome d'un véhicule,
dans lequel les deux étapes suivantes (S10 et S11) sont mises en œuvre pour le freinage autonome du véhicule :
actionner un dispositif motorisé (18) de génération de pression de freinage d'un système de freinage du véhicule, relié à au moins un circuit hydraulique (12, 12a, 12b) de freinage, de telle sorte qu'au moins une pression présente dans au moins un volume partiel dudit au moins un circuit hydraulique (12, 12a, 12b) de freinage soit augmentée, au moins un cylindre électromécanique ou électromagnétique (14) de freinage de roue, qui est associé à une roue (10) respective du véhicule, étant relié audit au moins un volume partiel dudit au moins un circuit hydraulique (12, 12a, 12b) de freinage de telle sorte que le véhicule soit freiné de manière autonome (S10) au moins en partie par l'actionnement du dispositif motorisé (18) de génération de pression de freinage, ledit au moins un cylindre (14) électromécanique ou électromagnétique de freinage de roue étant conçu avec :
- une chambre de pression formée dans le cylindre (14) électromécanique ou électromagnétique de freinage de roue, qui est délimitée par un premier piston de frein réglable du cylindre (14) électromécanique ou électromagnétique de freinage de roue, et qui est reliée au volume partiel respectif dudit au moins un circuit hydraulique (12, 12a, 12b) de freinage du système de freinage, de telle sorte que le premier piston de frein soit déplaçable au moyen de la pression accrue au moins dans le volume partiel respectif ;
- un actionneur électromécanique ou électromagnétique ; et
- un deuxième piston de frein du cylindre (14) électromécanique ou électromagnétique de freinage de roue, qui est apte à être réglé par l'actionnement de l'actionneur électromécanique ou électromagnétique ; et
actionner au moins un frein de roue individuel (20) électromécanique et/ou électromagnétique et/ou l'actionneur électromécanique ou électromagnétique respectif dudit au moins un cylindre (14) électromécanique ou électromagnétique de freinage de roue par roue (10) du véhicule de sorte que le véhicule soit freiné de manière autonome (S11) au moins en partie par l'actionnement d'au moins un frein de roue individuel (20) électromécanique et/ou électromagnétique et/ou d'au moins un actionneur électromécanique et/ou électromagnétique ;
**caractérisé par** l'étape suivante :
le véhicule est freiné de manière autonome principalement par l'actionnement d'au moins un frein de roue individuel (20) électromécanique et/ou électromagnétique et/ou d'au moins un actionneur électromécanique et/ou électromagnétique (14), et le dispositif motorisé (18) de génération de pression de freinage n'est utilisé pour le freinage autonome du véhicule que lorsqu'une altération du fonctionnement d'au moins un frein de roue individuel (20) électromécanique et/ou électromagnétique et/ou d'au moins un actionneur électromécanique et/ou électromagnétique est détectée et/ou lorsqu'une puissance de freinage totale maximale actuellement atteignable d'au moins un frein de roue individuel (20) électromécanique et/ou électromagnétique et d'au moins un actionneur électromécanique et/ou actionneur électromagnétique n'est pas suffisante pour freiner le véhicule de manière autonome sur une distance prédéfinie et/ou dans un intervalle de temps prédéfini.

7. Procédé de freinage autonome d'un véhicule,
dans lequel les deux étapes suivantes (S20 et S21) sont mises en œuvre pour freiner le véhicule de manière autonome :
actionner un dispositif motorisé (18) de génération de pression de freinage d'un système de freinage du véhicule, relié à au moins un circuit hydraulique (12, 12a, 12b) de freinage, de telle sorte qu'au moins une pression présente dans au moins un volume partiel dudit au moins un circuit hydraulique (12, 12a, 12b) de freinage soit augmentée, au moins un cylindre hydraulique (30) de freinage de roue, qui est associé à une roue (10) du véhicule, étant relié à au moins un volume partiel dudit au moins un circuit hydraulique (12, 12a, 12b) de freinage de telle sorte que le véhicule soit au moins partiellement freiné de manière autonome (S20) par l'actionnement du dispositif motorisé (18) de génération de pression de freinage ; et
actionner au moins un frein de roue individuel (20) électromécanique et/ou électromagnétique par roue (10) du véhicule de telle sorte que le véhicule soit au moins partiellement freiné de manière autonome par l'actionnement d'au moins un frein de roue individuel (20) électromécanique et/ou électromagnétique (S21),
**caractérisé par** l'étape selon laquelle
le véhicule est freiné de manière autonome principalement par l'actionnement d'au moins un frein de roue individuel (20) électromécanique et/ou électromagnétique, et le dispositif motorisé (18) de génération de pression de freinage n'est utilisé pour le freinage autonome du véhicule que lorsqu'une altération du fonctionnement dudit au moins un frein de roue individuel (20) électromécanique et/ou électromagnétique est détectée et/ou lorsqu'une puissance de freinage totale maximale actuellement atteignable d'au moins un frein de roue individuel (20) électromécanique et/ou électromagnétique n'est pas suffisante pour freiner le véhicule de manière autonome sur une distance prédéfinie et/ou dans un intervalle de temps prédéfini.
